# EUROPÄISCHE PATENTSCHRIFT

(11) **EP 2 314 139 B1**
(45) Veröffentlichungstag und Bekanntmachung des Hinweises auf die Patenterteilung: **22.08.2012**
(21) Anmeldenummer: 10013813.0
(22) Anmeldetag: 20.10.2010
(51) Int. Cl.: A01B 17/00, A01C 5/06

(54) **Vorrichtung für die verstellbare Befestigung von Düngereinlegern oder Vorschälern für Pflüge**
Device for adjustable fixing of fertiliser inserters or skimmers for ploughs
Dispositif pour la fixation réglable d'éléments d'insertion d'engrais ou de rasette pour charrues

(30) Priorität: 21.10.2009 DE 102009050015
(43) Veröffentlichungstag der Anmeldung: 27.04.2011
(73) Patentinhaber: Lemken GmbH & Co. KG, 46519 Alpen (DE)
(72) Erfinder: Verhülsdonk, Mark, 47627 Kevelaer (DE); Meurs, Wilhelm, 46519 Alpen (DE); Gelen, Lars, 47495 Rheinberg (DE); Hönnekes, Ernst, 47652 Weeze (DE); Jochums, Dieter, 47199 Duisburg (DE)
(74) Vertreter: Schulte & Schulte

(56) Entgegenhaltungen:
- DE-U- 7 415 663
- FR-A1- 2 466 939
- US-A- 2 216 085
- US-A- 5 191 945
- US-A- 5 370 070

## Beschreibung

Die Erfindung betrifft eine Vorrichtung für die verstellbare Befestigung von Düngereinlegern oder Vorschälern für Pflüge gemäß dem Oberbegriff des Anspruches 1.

Es sind verschiedene Vorrichtungen bekannt, mit denen Düngereinleger oder Vorschäler sowohl in der Arbeitstiefe verstellt werden können als auch in der Winkelstellung Insbesondere eine optimierte Winkelstellung stellt sicher, dass der Boden, der von den Düngereinlegern oder von den Vorschälern abgeschält wird, so seitlich in die Furche gefördert oder geworfen wird, wie erforderlich. Die Winkelstellung bzw. die Wurfwinkelstellung muss von Fall zu Fall verändert werden, beispielsweise dann, wenn mit unterschiedlichen Geschwindigkeiten gepflügt wird bzw. wenn die Bodenverhältnisse eine andere Ablage des von den Düngereinlegern oder Vorschälern abgeschälten Bodens erforderlich machen. Dabei ist es zweckmäßig, dass die Arbeitstiefeneinstellung des Düngereinlegers und die Winkeleinstellung getrennt voneinander erfolgen, da sonst durchgeführte Einstellungen gegenseitig beeinflusst werden. Eine entsprechende Vorrichtung ist dem deutschen Gebrauchsmuster 7 415 663 zu entnehmen. Die dort dargestellte Vorrichtung besteht aus Stellvorrichtungen, die die jeweilige Position des Düngereinlegers bzw. Vorschälers reibflüssig fixieren. Diese einfache Art der Vorrichtung für die verstellbare Befestigung von Düngereinlegern oder Vorschälern ist unkomfortabel und unzweckmäßig. Die deutsche Patentschrift DE 43 39 254 zeigt dagegen eine Vorrichtung, bei der die Winkelstellung aller Düngereinleger und Vorschäler eines Pfluges zentral eingestellt werden können. Die Arbeitstiefe der Düngereinleger und Vorschäler wird dagegen individuell eingestellt. Diese zentrale Einstellvorrichtung für Düngereinleger und Vorschäler hat sich trotzt des hohen Bedienkomforts nur bedingt durchgesetzt, da diese Ausführungsform der Vorrichtung sehr teuer ist und auch das Eigengewicht des Pfluges spürbar erhöhte. Dem Prospekt LEMKEN Anbau-Drehpflüge EutOpal und VariOpal mit dem Druckvermerk LEM. B.o.s.s. 03/08 175 0051/de ist ein Düngereinleger zu entnehmen, der formschlüssig höheneinstellbar an einem Flachhalm als Stiel positioniert ist. Über eine Wurfwinkelverstellung, als Stellvorrichtung für die Winkelstellung kann der Düngereinleger oder Vorschäler um eine senkrechte Schwenkachse in einfacher Weise verstellt werden. Die Winkelstellung wird hier nicht zentral sondern individuell durchgeführt. Diese Vorrichtung für die Einstellung der Winkelstellung hat sich nur begrenzt durchgesetzt, weil auch diese Ausführungsform relativ aufwendig und teuer ist.

Aufgabe der Erfindung ist es, eine Vorrichtung für die Verstellung der Düngereinleger und Vorschäler zu schaffen, bei der die Arbeitstiefe des Düngereinlegers einfach einstellbar ist, bei der auch eine einfache Veränderung der Winkelstellung möglich ist und bei der der jeweilige Düngereinleger bzw. Vorschäler immer formschlüssig in der eingestellten Funktion verbleibt und die sich außerdem durch ein geringes Gewicht auszeichnet und die insbesondere auch kostengünstig ist.

Die Aufgabe wird gemäß dem kennzeichnenden Teil des Patentanspruches 1 gelöst. Durch die formschlüssige Fixierung des Rumpfes in Längsrichtung des Stiels, was einer Arbeitstiefeneinstellung entspricht, kann mit dem Keil die Winkelstellung verändert werden, ohne dass sich die Arbeitstiefeneinstellung verändert. Die Führungstasche ist breiter ausgebildet als der Stiel und kann so nebeneinander den Stiel und den Keil aufnehmen. Wird der Keil demontiert und in die gegenüberliegende Position montiert, entspricht dies einer Änderung einer Winkelstellung von z.B. 10°. Durch diese geänderte Winkelstellung wird der von den Düngereinlegern bzw. Vorschälern abgeschälte Boden im Wurfwinkel ebenfalls um ca. 10 ° verändert. Es ist auch vorgesehen, dass der Keil in Arbeitsrichtung gesehen von hinten zwischen der jeweiligen Innenwand der Führungstasche des Rumpfes und dem Stiel steckbar ausgebildet ist. Es ist als vorteilhaft anzusehen, dass der Keil von hinten, also im Schatten des Bodenflusses, zwischen Stiel und Innenwand der Führungstasche gesteckt wird. Dadurch wird sichergestellt, dass der Keil nicht zu sehr mit Boden in Kontakt kommt und daher immer ohne großen Aufwand demontiert und in eine neue Position montiert werden kann.

Die Erfindung sieht weiter vor, dass der Keil mindestens aus zwei Teilen besteht und für Zwischenwinkelstellungen ein Teil des Keiles zwischen der einen Seite des Stiels und der ersten Innenwand der Führungstasche und ein anderer Teil des Keiles zwischen der anderen Seite des Stiels und der der ersten Innenwand gegenüberliegenden Innenwand der Führungstasche positionierbar ausgebildet ist. Dadurch, dass der Keil aus mehreren Teilen besteht, kann die Winkelstellung nicht nur um einen großen Winkel verändert werden, sondern in Zwischenwinkelstufen. Somit können auch auf einfache Weise kleine Änderungen der Winkelstellung vorgenommen werden. Besteht der Keil zum Beispiel aus vier Teilen, können auch entsprechend der einzelnen Breiten der Teile vier unterschiedliche Winkelstellungen eingestellt werden.

Außerdem ist daran gedacht, dass die Stellvorrichtung für die Arbeitstiefeneinstellung aus einem Steckstift besteht, der durch Querbohrungen im Rumpf und durch Querbohrungen im Stiel führbar ausgebildet ist. Die bekannte Ausführung, einen Steckstift in Verbindung mit Querbohrungen in den entsprechenden Teilen vorzusehen, ist kostengünstig und zweckmäßig. In einfacher Weise können so alle Düngereinleger und Vorschäler in eine vergleichbare Arbeitstiefenstellung gebracht werden. Dies wäre beispielsweise mit Spindeln oder anderen stufenlosen Stellvorrichtungen nicht möglich.

Die Erfindung sieht weiter vor, dass der Keil durch einen Klappstecker oder Steckstift in Position gehalten wird. Klappstecker mit einem gefederten

Sicherungsbügel stellen eine sehr einfache Sicherung für einen derartigen Keil dar. Denkbar sind natürlich auch Steckstifte oder andere Sicherungsmittel, mit denen der Keil in einfacher Weise in Position gehalten werden kann.

Weitere Einzelheiten der Erfindung sind den Figuren und der Figurenbeschreibung zu entnehmen.
- Figur 1: zeigt eine perspektivische Rückansicht eines Vorschälers,
- Figur 2: einen Schnitt durch die Führungstasche des Rumpfes,
- Figur 3: eine perspektivische Rückansicht der Führungstasche in der ersten Winkelstellung,
- Figur 4: eine Rückansicht der Führungstasche in der anderen Winkelstellung und
- Figur 5: eine perspektivische Ansicht des Keiles.

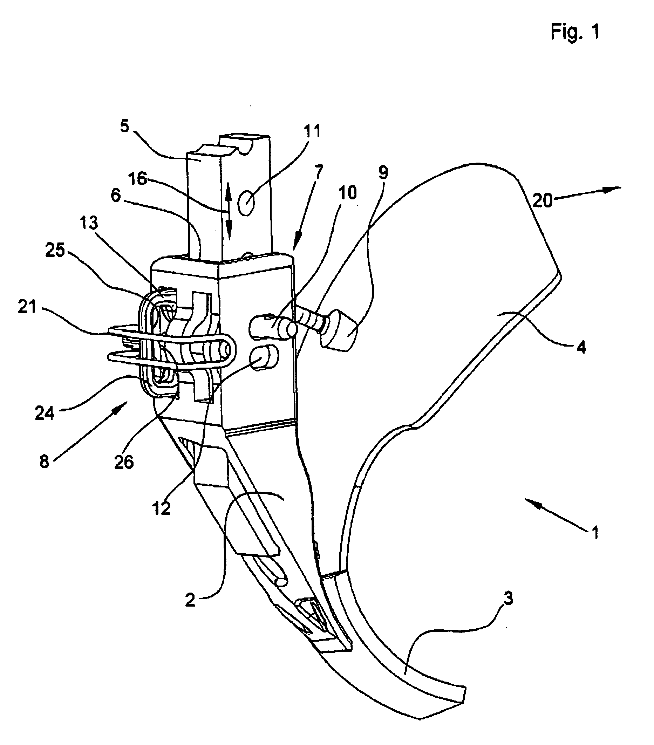

Figur 1 zeigt eine perspektivische Rückansicht des Vorschälers 1. Der Vorschäler 1 besteht aus einem Schar 3 und einem Streichblech 4, die jeweils am Rumpf 2 befestigt sind. Am Rumpf 2 befindet sich eine Abstützung 9, gegen die sich das Streichblech 4 abstützen kann. Der Rumpf 2 weist eine Führungstasche 6 auf, in die der Stiel 5 hineinragt. Der Stiel 5 weist Querbohrungen 11 auf und der Rumpf 2 Querbohrungen 12, die hier als Langlöcher ausgebildet sind. Durch die Querbohrungen 11 und 12 ist der Steckstift 10 durchgeführt, der in Verbindung mit den Querbohrungen 11 und 12 die Stellvorrichtung 7 für die Arbeitstiefe bildet. Der Stiel 5 ist hier senkrecht ausgeführt, so dass der Vorschäler 1 in Längsrichtung 16 des Stiels 5 mit der Stellvorrichtung 7 in der Arbeitstiefenposition verändert werden kann. Die Führungstasche 6 ist breiter ausgebildet als der Stiel 5 und nimmt neben dem Stiel 5 auch den Keil 13 auf. Die Führungstasche 6 des Rumpfes 2 weist hinten zwei nebeneinander angeordnete Öffnungen 17 auf, durch die der Keil 13 je nach gewünschter Winkelstellung durchgesteckt werden kann. Für eine einfache Handhabung des Keiles 13 ist dieser mit einem Griff 24 ausgestattet. Der Griff 24 des Keils weist eine Öse 25 auf und die Führungstasche 6 die Bohrungen 26, durch die der Klappstecker 21 geführt wird. Der Keil 13 wird so durch den Klappstecker 21 in Position gehalten. Der Keil 13 und der Klappstecker 21 bilden so die Stellvorrichtung 8 für die Veränderung der Winkelstellung.

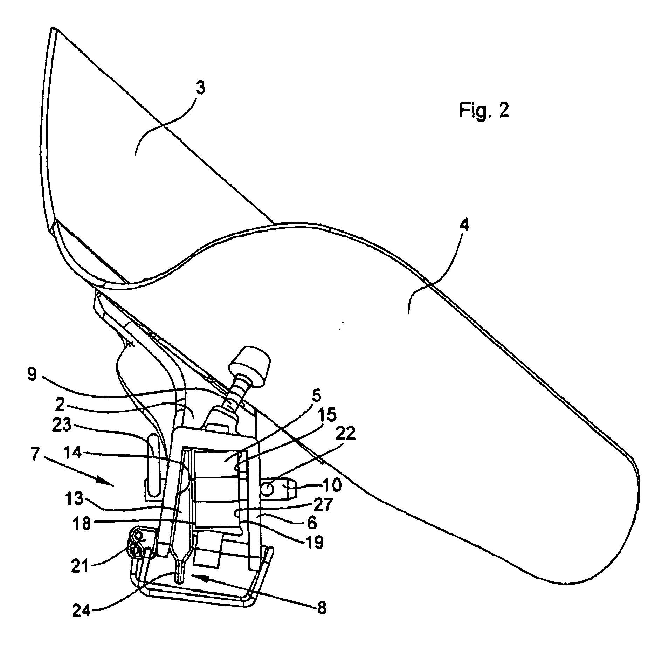

Figur 2 zeigt einen Schnitt durch die Führungstasche 6 des Rumpfes 2. Sie verdeutlicht, wie der Keil 13 neben dem Stiel 5 in der Führungstasche 6 angeordnet ist. Die Führungstasche 6 weist oben und unten einen Kragen 27 auf, der zur Versteifung der Führungstasche 6 und auch für die Fixierung des Keils 13 dient. In der jeweiligen Winkelstellung stützt sich der Keil 13 seitlich gegen eine der beiden Innenwände 14,15 der Führungstasche ab, der benachbarte Stiel 5 stützt sich dagegen jeweils gegen den Kragen 27 ab. In der Ausführung mit einem Keil 13, der aus mehreren Teilen besteht, wird der Überstand des Kragens 27 durch eine Füllplatte ausgeglichen oder gänzlich auf den Kragen 27 verzichtet. Der Keil 13 ist dann so ausgebildet, dass er, vom Steckstift 10 und dem Klappstecker 21 geführt, in Position gehalten wird. Der Steckstift 10 bildet unter anderem mit dem Griff 23 die Stellvorrichtung 7. Die Bohrung 22 des Steckstiftes 10 dient zur Aufnahme eines Sicherungssteckers. Der Stiel 5 mit seinen Seiten 18 und 19 stützt sich, wie bereits erwähnt, zum einen gegen den Keil 13 und zum anderen gegen den Kragen 27 der Führungstasche 6 ab.

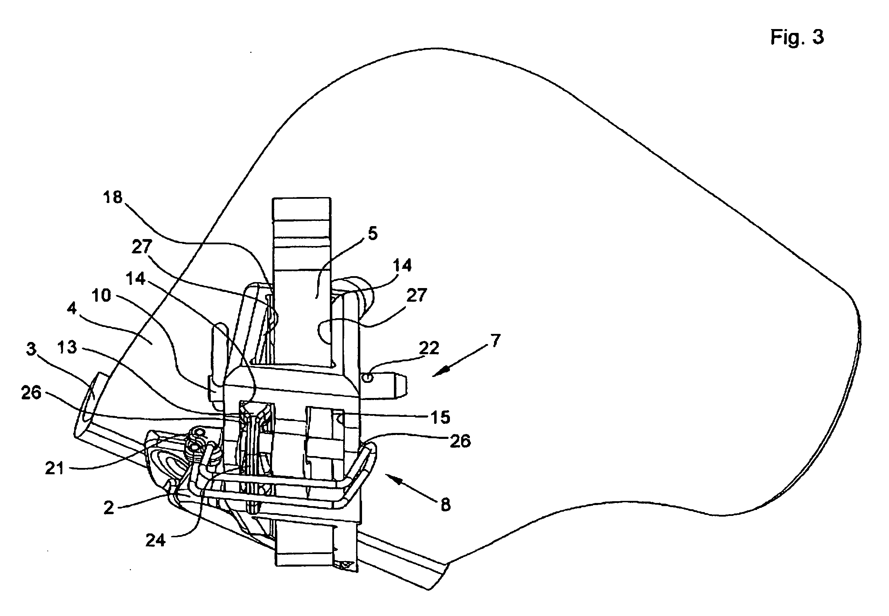

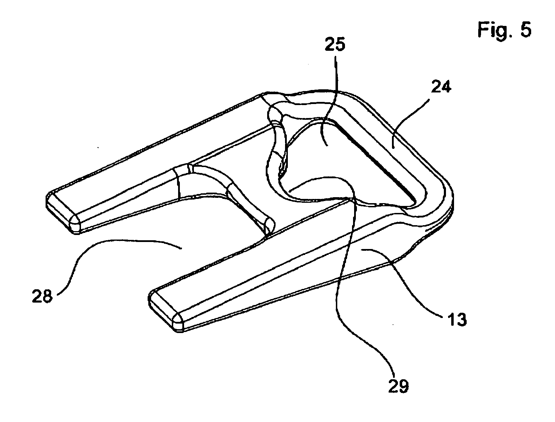

Figur 3 zeigt eine perspektivische Rückansicht der Führungstasche 6 und der Stellvorrichtung 8 für die Änderung der Winkelstellung. In der dargestellten Winkelstellung befindet sich der Keil 13 zwischen der Seite 18 des Stiels 5 und der Innenwand 14 der Führungstasche 6. Der Keil 13 wird über den Klappstecker 21 gegen Herausrutschen gesichert. Der Klappstecker 21 greift dabei durch die Bohrungen 26 der Führungstasche 6 und durch die Öse 25 des Klappsteckers 21, die durch den Griff 24 gebildet wird. Die Öse weist dabei einen Anschlag 29 auf, auf den näher in der Beschreibung zu Figur 5 eingegangen wird.

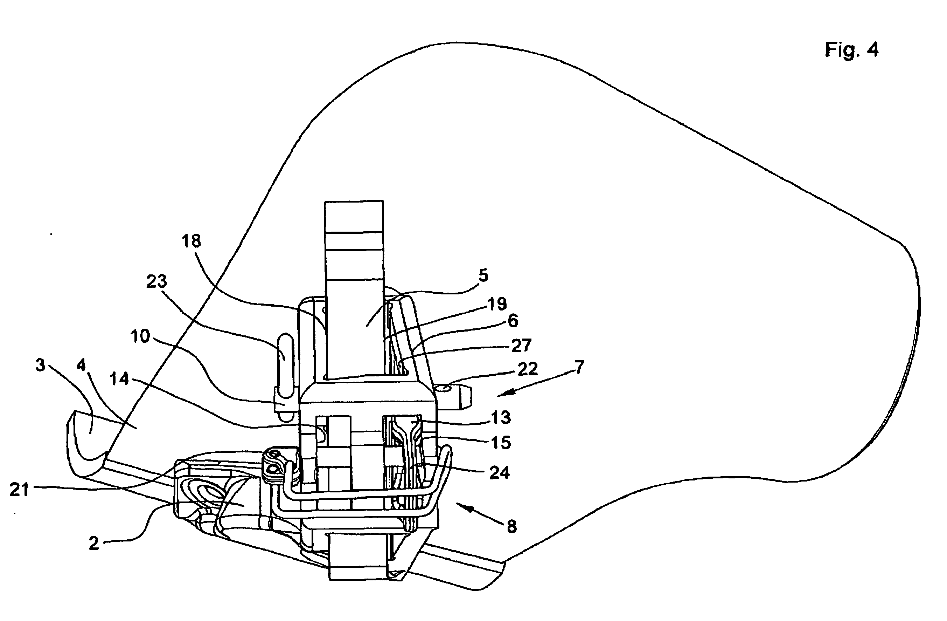

Eine andere Winkelstellung als in Figur 3 dargestellt, ist Figur 4 zu entnehmen, in der sich der Keil 13 nun zwischen der Seite 19 des Stiels 5 und der Innenwand 15 befindet. Durch das Vorsehen eines Keils 13, der je nach Einbauposition die Winkelstellung des Düngereinlegers oder Vorschälers1 vorgibt, wird eine kostengünstige Stellvorrichtung 8 für die Änderung der Winkelstellung gebildet, ohne dabei das Gewicht des Pfluges insgesamt spürbar zu erhöhen. Die Figuren zeigen eine bevorzugte Ausführungsform der Stellvorrichtung 8, bei der der Keil 13 im Schatten des Bodenflusses von hinten in die Führungstasche 6 gesteckt wird. Denkbar ist auch, den Keil 13 von der Seite, von vorne, oben oder von unten zwischen Stiel 5 und Führungstasche 6 zu positionieren. Der Keil 13 und die Führungstasche 6 müssen dann entsprechend der Einbauart modifiziert ausgebildet sein.

Die Figur 5 zeigt den Keil 13 in der bevorzugten Version, die den Einbau von hinten in die Führungstasche 6 ermöglicht. Um den Keil 13 ohne Demontage des Steckstiftes 10 demontieren und montieren zu können, weist er in der Mitte eine U-förmige Ausnehmung 28 auf. Wenn kein Kragen 27 an der Führungstasche 6 vorgesehen ist, wird die Ausnehmung 28 als Schlitzloch ausgebildet, über das der Keil 13 dann mittels Steckstift 10 geführt wird. Hinten weist der Keil 13 den als Öse 25 ausgebildeten Griff 24 auf. Die Öse 25 geht übergangslos in den Anschlag 29 über, der sich in montierter Stellung des Keils 13 gegen den Klappstecker 21 abstützt. Der Keil 13 wird dann so in Position gehalten.

## Patentansprüche

1. Vorrichtung mit einem Rumpf und einem Stiel für die verstellbare Befestigung von Düngereinlegem oder Vorschälem (1) für Pflüge, die über den Rumpf (2) und dem Stiel (5) mit dem Pflug verbunden sind, wobei der Rumpf (2) eine Führungstasche (6) aufweist, in die der Stiel (5) hineingreift und der Rumpf (2) so mittels Stellvorrichtungen (7,8) in Längsrichtung (16) des Stiels (5) und in der Winkelstellung einstellbar am Stiel (5) fixiert ist,
**dadurch gekennzeichnet,**
**dass** der Rumpf (2) in Längsrichtung (16) des Stiels (5) mittels einer Stellvorrichtung (7) formschlüssig mit dem Stiel (5) fixierbar ausgebildet ist, dass ein Keil (13) vorgesehen ist, der zwischen einer ersten Innenwand (14) der Führungstasche (6) und dem Stiel (5) positioniert ist und dass eine Änderung der Winkelstellung derart ermöglicht wird, dass der zwischen der ersten Innenwand (14) und dem Stiel (5) positionierte Keil (13) zwischen der der ersten Innenwand (14) gegenüberliegenden Innenwand (15) der Führungstasche (6) und dem Stiel (5) positionierbar ausgebildet ist, wobei der Keil (13) in Arbeitsrichtung (20) gesehen von hinten zwischen der jeweiligen Innenwand (14,15) der Führungstasche (6) des Rumpfes (2) und dem Stiel (5) steckbar ausgebildet ist.

2. Vorrichtung nach Anspruch 1,
**dadurch gekennzeichnet,**
**dass** der Keil (13) mindestens aus zwei Teilen besteht und für Zwischenwinkeistellungen ein Teil des Keines (13) zwischen der einen Seite (18) des Stiels (5) und der ersten Innenwand (14) der Führungstasche (6) und ein anderer Teil des Keiles (13) zwischen der anderen Seite (19) des Stiels (5) und der der ersten Innenwand (14) gegenüberliegenden innenwand (15) der Führungstasche (6) positionierbar ausgebildet ist

3. Vorrichtung nach Anspruch 1,
**dadurch gekennzeichnet,**
**dass** die Stellvorrichtung (7) für die Arbeitstiefeneinstellung aus einem Steckstift (10) besteht, der durch Querbohrungen (12) im Rumpf (3) und durch Querbohrungen (11) im Stiel (5) führbar ausgebildet ist.

4. Vorrichtung nach Anspruch 1 oder 2,
**dadurch gekennzeichnet,**
**dass** der Keil (13) durch einen Klappstecker (21) oder Steckstift in Position gehalten wirt.

## Claims

1. Device with a body and a handle for the adjustable fixing of fertiliser inserters or skimmers (1) for ploughs, which are connected with the plough over the body (2) and the handle (5), wherein the body (2) has a guide pocket (6) in which the handle (5) engages and the body (2) is in this way fixed to the handle (5) in the longitudinal direction of the (16) handle (5) using adjusting devices (7, 8) and is adjustable in its angular position,
**characterised**
**in that** the body (2) is designed to be fixable in the longitudinal direction (16) of the handle (5) in a form-fitting manner with the handle (5) by means of an adjusting device (7), in that a wedge (13) is provided which is positioned between a first inner wall (14) of the guide pocket (6) and the handle (5) and in that any change in the angular position is possible in such a way that the wedge (13) positioned between the first inner wall (14) and the handle (5) is designed to be positionable between the inner wall (15)) of the guide pocket (6), which is opposite to the first inner wall (14), and the handle (5), wherein the wedge (13) is designed to be pluggable from behind, seen in the direction of operation ( 20), between the respective inner wall (14, 15) of the guide pocket (6) of the body (2) and the handle (5).

2. The device according to Claim 1,
**characterised**
**in that** the wedge (13) consists of at least two parts and a part of the wedge (13) is designed to be positionable for making adjustments of the intermediate angle between the one side (18) of the handle (5) and the first inner wall (14) of a guide pocket (6) and another part of the wedge (13) between the other side (19) of the handle (5) and the inner wall (15)) of the guide pocket (6) which is opposite to the first inner wall (14).

3. The device according to Claim 1,
**characterised**
**in that** the adjusting device (7) for the working depth setting consists of an insertable pin (10) which is designed to be guidable through transverse holes (12) in the body (3) and through transverse holes (11) in the handle (5).

4. The device according to Claim 1 or 2,
**characterised**
**in that** the wedge (13) is held in position by a lynch pin (21) or an insertable pin.

## Revendications

1. Dispositif avec un corps et un manche pour la fixation ajustable d'enfouisseurs d'engrais ou de rasettes (1) pour charrues qui sont reliées par l'intermédiaire du corps (2) et du manche (5) à la charrue, étant donné que le corps (2) présente une poche de guidage (6) dans laquelle prend le manche (5) et, ainsi, le corps (2) est fixé sur le manche (5) au moyen de dispositifs d'ajustage (7, 8) dans le sens longitudinal (16) du manche (5) avec possibilité de réglage de la position angulaire.
**caractérisé**
**en ce que** le corps (2) est formé de manière pouvoir être fixé dans le sens longitudinal (16) du manche (5) au moyen d'un dispositif d'ajustage (7) en contact positif avec le manche (5), en ce qu'est prévue une clavette (13) qui est positionnée entre une première paroi intérieure (14) de la poche de guidage (6) et le manche (5) et en ce qu'une modification de la position angulaire est rendue possible de manière à ce que la clavette (13) positionnée entre la première paroi intérieure (14) et le manche (5) soit formée de manière à pouvoir être positionnée entre la paroi intérieure (15) de la poche de guidage (6) située en face de la première paroi intérieure (14) et le manche (5), étant donné que la clavette (13), vue dans le sens de travail ( 20), est formée de manière à pouvoir être enfichée de derrière entre la paroi intérieure (14, 15) respective de la poche de guidage (6) du corps (2) et le manche (5).

2. Dispositif selon la revendication 1,
**caractérisé**
**en ce que** la clavette (13) se compose d'au moins deux parties et, pour des positions angulaires intermédiaires, une partie de la clavette (13) est formée de manière à pouvoir être positionnée entre le côté (18) du manche (5) et de la première paroi intérieure (14) de la poche de guidage (6), et une autre partie de la clavette (13) entre l'autre côté (19) du manche (5) et de la paroi intérieure (15) de la poche de guidage (6) située en face de la première paroi intérieure (14).

3. Dispositif selon la revendication 1,
**caractérisé**
**en ce que** le dispositif d'ajustage (7) destiné au réglage de la profondeur de travail se compose d'un goujon d'arrêt (10) qui est formé de manière à pouvoir être guidé à travers des alésages transversaux (12) dans le corps (3) et des alésages transversaux (12) dans le manche (5).

4. Dispositif selon la revendication 1 ou 2,
**caractérisé**
**en ce que** la clavette (13) est maintenue en position par une broche de sécurité (21) ou un goujon d'arrêt.
